Europäisches Patentamt

European Patent Office

Office européen des brevets

(19)

(11) Numéro de publication: **0 102 883**
**B1**

(12) # FASCICULE DE BREVET EUROPEEN

(45) Date de publication du fascicule du brevet:
**27.08.86**

(51) Int. Cl.⁴: **F 16 C 39/06**

(21) Numéro de dépôt: **83401588.5**

(22) Date de dépôt: **01.08.83**

(54) Agencement de roue cinétique à paliers magnétiques, notamment pour le stockage d'énergie.

(30) Priorité: **19.08.82 FR 8214339**

(43) Date de publication de la demande:
**14.03.84 Bulletin 84/11**

(45) Mention de la délivrance du brevet:
**27.08.86 Bulletin 86/35**

(84) Etats contractants désignés:
**DE GB SE**

(56) Documents cités:
**DE - A - 2 655 006**
**FR - A - 2 110 581**
**FR - A - 2 212 889**
**FR - A - 2 511 558**

(73) Titulaire: **SOCIETE NATIONALE INDUSTRIELLE AEROSPATIALE, 37 boulevard de Montmorency, F-75016 Paris Cedex 16 (FR)**

(72) Inventeur: *Caye, Paul Daniel, 20 Allée des Sources, F-78680 Epone (FR)*
Inventeur: **Weisser, Bernard Georges, 30, rue de Saint-Martin, F-78520 Limay (FR)**
Inventeur: **Jamain, Patrice Christian, 92, côte de Beulle, F-78580 Maule (FR)**

(74) Mandataire: **Bonnetat, Christian et al, Cabinet PROPI Conseils 23 rue de Léningrad, F-75008 Paris (FR)**

Description

La présente invention concerne un agencement de roue cinétique à paliers magnétiques, notamment pour le stockage d'énergie.

Dans les brevets français FR-A-22 57 077, FR-A-22 94 430, FR-A-23 84 174 et FR-A-25 11 558, la Demanderesse a décrit divers agencements de roue cinétique à paliers magnétiques. Ces agencements antérieurs peuvent être utilisés pour la commande de l'attitude de satellites artificiels et/ou pour le stockage d'énergie soit à bord de tels satellites, soit au sol.

L'objet de la présente invention est un tel agencement de roue cinétique destiné plus particulièrement, quoique non exclusivement, à servir d'accumulateur d'énergie au sol, c'est-à-dire comportant un rotor, comprenant un volant et suspendu magnétiquement par rapport à un stator, qui accumule l'énergie sous forme cinétique lorsqu'il est entraîné en rotation par un moteur électrique et qui restitue l'énergie cinétique ainsi emmagasinée sous forme électrique par l'intermédiaire d'un générateur électrique, lesdits moteur et générateur pouvant éventuellement être constitués de la même machine de type réversible. Le fonctionnement d'un tel agencement implique avantageusement que le rotor se trouve dans le vide, de sorte que généralement le stator et le rotor sont enfermés dans une enceinte sous vide.

Avec les agencements de roue cinétique de ce type, il est évident que l'énergie cinétique emmagasinée est d'autant plus grande que la masse et la rotation du volant du rotor sont plus grandes. Aussi, en vue de l'utilisation des agencements de roue cinétique comme accumulateurs d'énergie, il est indispensable de donner à la masse et à la vitesse de rotation du rotor de ceux-ci des valeurs élevées. Or, si pour des agencements de tailles relativement modestes la rotation du rotor ne conduit à aucune difficulté de stabilité, la Demanderesse a constaté que, pour des agencements plus importants, des phénomènes d'instabilité avec divergence radiale apparaissaient, ces phénomènes étant susceptibles d'interdire tout fonctionnement auxdits agencements.

Pour remédier à l'instabilité radiale du rotor de tels agencements, on pourrait penser à mettre en œuvre des moyens de correction actifs du type de ceux décrits, à une fin différente, dans le brevet français FR-A-25 11 558 mentionné ci-dessus. Cependant, de tels moyens de correction mettent en œuvre des capteurs de vitesse et une chaîne électronique qui augmentent la complexité, le coût et la masse de l'agencement de roue cinétique et diminuent la fiabilité de ce dernier.

Aussi, l'objet de la présente invention est un agencement de roue cinétique à paliers magnétiques comportant des moyens passifs permettant automatiquement la correction des phénomènes d'instabilité radiale du rotor.

A cette fin, selon l'invention, l'agencement de roue cinétique comprenant un stator et un rotor, des paliers magnétiques formés de parties coopérantes respectivement liées au stator et au rotor pour suspendre magnétiquement le rotor par rapport au stator, des paliers mécaniques pour permettre au stator de supporter le rotor lorsque celui-ci n'est pas suspendu magnétiquement, un volant d'inertie constituant une partie du rotor et des moyens permettant de contrôler le long de l'axe de rotation défini par le stator la position du rotor par rapport au stator, ledit stator étant relié à un support de grande inertie, tel que le sol, est remarquable en ce qu'il comporte, pour les parties des paliers magnétiques liées au stator, un système de suspension élastique qui est raide dans une première direction parallèle à l'axe de rotation du rotor, raide dans une seconde direction orthogonale à l'axe de rotation du rotor et souple dans une troisième direction orthogonale aux deux directions précédentes.

Ainsi, grâce à l'invention, sans perturber les moyens de contrôle de la position axiale du rotor puisque le système de suspension est raide parallèlement à cette direction, on introduit une dissymétrie radiale de raideur selon deux directions orthogonales, de sorte que l'on permet un déplacement des parties des paliers magnétiques liées au stator par rapport au support à grande inertie et que l'on découple les vibrations apparaissant le long des seconde et troisième directions.

On remarquera que, dans le document FR-A-2 212 889, est décrit un dispositif destiné à assurer l'amortissement des mouvements de nutation d'un rotor, comportant un corps magnétique monté sur un support qui est relié à un bâti par un moyen de suspension tel que fils, cordes à piano, ressorts, etc... Ce dispositif d'amortissement fait intervenir un élément magnétique partiellement libre dans un plan de façon à pouvoir vibrer dans ce plan, grâce à un centrage élastique et à un amortissement mécanique par frottement.

Pour tenter d'expliquer l'action du système de suspension élastique selon l'invention, on doit rappeler que les paliers magnétiques sont constitués de couronnes magnétiques en regard, exerçant l'une sur l'autre une action d'auto-alignement de leurs axes et communiquant au rotor sa raideur radiale par rapport au stator. Aussi, si accidentellement, la couronne liée au rotor est décentrée par rapport à la couronne du stator, le rotor subit une force de rappel radiale. L'instabilité avec divergence radiale ne peut donc se comprendre que si l'on fait intervenir des phénomènes engendrant une force parasite radiale s'ajoutant à la force de rappel radiale des paliers et d'intensité comparable.

Comme on le verra par la suite, la Demanderesse pense que, par suite des pertes magnétiques, il apparaît une force perturbatrice appliquée à l'axe du rotor et orthogonale à la ligne de plus courte distance (excentrement) joignant l'axe du stator à l'axe excentré du rotor. La Demanderesse suppose donc que le rotor est soumis à un premier mode vibratoire de direction parallèle à cette force perturbatrice et à un second mode vibratoire de direction parallèle à l'excentrement. Ces deux modes vibratoires présentent chacun leur pic de résonance à la même fréquence et l'instabilité divergente résulterait de la conjonction des deux résonances.

Par suite, puisque selon l'invention, on découple ces deux modes vibratoires, on peut éviter la conjonction des deux résonances et donc l'apparition du phénomène d'instabilité divergente. Par ailleurs, puisque le stator peut plus facilement se déplacer (de façon limitée) dans ladite troisième direction, les couronnes du stator peuvent se déplacer légèrement dans cette direction sous l'action de la force de rappel radiale, dans le sens de l'auto-alignement des axes des couronnes des paliers, pour limiter et annuler l'excentrement du rotor.

Les explications données ci-dessus n'ont d'autre but que de tenter d'expliquer la façon dont agit le système de suspension élastique selon l'invention et ne sauraient être limitatives de l'invention. Que ces explications soient exactes ou au contraire fausses ou incomplètes, les conclusions que l'on en tire sont de toute manière exactes, puisque l'expérience montre que le système de suspension selon l'invention permet d'éliminer le phénomène d'instabilité divergente.

Les résultats positifs obtenus par la mise en œuvre de la présente invention indiquent que l'instabilité divergente, apparaissant lorsque la force de rappel des paliers magnétiques présente une symétrie de révolution autour de l'axe desdits paliers, ne se produit pas lorsque, grâce à la présence du système de suspension selon l'invention, cette force de rappel est rendue variable autour dudit axe pour prendre des valeurs différentes le long de deux axes radiaux orthogonaux.

Quoique ledit système de suspension puisse être intercalé en un point quelconque de la chaîne mécanique liant les couronnes de paliers du stator au support de grande inertie, pour des raisons de simplicité, il est avantageux que les parties de paliers magnétiques liées au stator soient solidaires de celui-ci, tandis que le système de suspension élastique est disposé entre le support de grande inertie et le stator. Ainsi, ce ne sont pas seulement les parties de paliers magnétiques liées au rotor qui possèdent un degré de liberté parallèlement à ladite troisième direction, mais la totalité du stator. On remarquera que cette solution est particulièrement avantageuse puisqu'elle permet de perfectionner selon l'invention des agencements de roue cinétique antérieurement fabriqués, sans modifications internes de ceux-ci.

Lorsque l'agencement de roue cinétique comporte de façon connue une enveloppe qui enferme le stator et le rotor et dans laquelle il est possible de faire le vide, il est préférable que cet agencement comporte une plaque de base portant le stator (et donc le rotor) et faisant saillie à l'extérieur de l'enveloppe. Ainsi, le système de suspension peut être disposé entre la partie de la plaque faisant saillie à l'extérieur de l'enveloppe et ledit support de grande inertie.

Le système de suspension peut être constitué de toutes façons connues pour obtenir le résultat et être composé d'éléments élastiques connus de toutes sortes. Cependant, à des fins de simplicité, on réalise de préférence ledit système de suspension à l'aide d'une pluralité de lames élastiques disposées parallèlement les unes aux autres, de façon que la longueur, la largeur et l'épaisseur desdites lames élastiques soient respectivement parallèles aux première, seconde et troisième directions.

Les lames élastiques du système de suspension peuvent travailler à la compression et/ou à la traction; il est toutefois avantageux que ce soit à la traction. Aussi, dans un mode de réalisation préféré, le système de suspension comporte une pluralité de socles répartis à la périphérie de la partie de la plaque faisant saillie à l'extérieur de l'enveloppe et pourvus à leur partie supérieure de moyens de guidage du bord de ladite plaque, la liaison entre la plaque et chaque socle étant réalisée par une lame élastique solidaire à sa partie supérieure dudit socle et à sa partie inférieure d'un prolongement solidaire de ladite plaque.

Il peut être avantageux de prévoir un certain amortissement du mouvement des parties de palier liées au stator. Un tel amortissement peut être procuré par une lame élastique exerçant une pression de frottement déterminée sur une partie mobile de la chaîne mécanique liant les couronnes du stator au support de grande inertie, par exemple la plaque de support mentionnée ci-dessus.

Les figures du dessin annexé feront bien comprendre comment l'invention peut être réalisée.

La figure 1 est une vue en coupe axiale d'un exemple de réalisation de la roue cinétique à paliers magnétiques selon l'invention.

La figure 2 est un schéma illustrant le phénomène d'instabilité affectant l'axe du rotor de la roue cinétique de la figure 1, dans certaines conditions de masse et de vitesse de rotation dudit rotor.

La figure 3 est une coupe selon la ligne III–III de la figure 1.

La figure 4 donne le schéma équivalent radial de la roue cinétique de la figure 1.

La figure 5 donne la fonction de transfert radiale du modèle de la figure 4.

La figure 6 est une vue en perspective d'une variante de réalisation de la roue cinétique selon l'invention.

La figure 7 montre, à plus grande échelle, un détail de la suspension de la roue cinétique de la figure 4.

Sur ces figures, des références identiques désignent des éléments semblables.

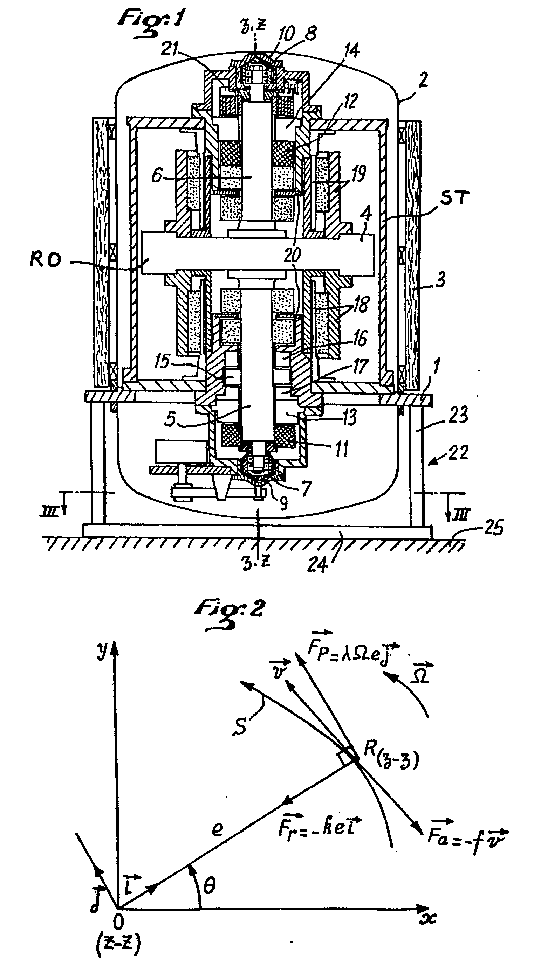

Le mode de réalisation d'agencement de roue cinétique à paliers magnétiques, conforme à l'invention et montré par la figure 1, comporte une plaque de base horizontale 1 de laquelle sont solidaires directement ou indirectement, tous les éléments fixes du stator ST de ladite roue, et par rapport à laquelle tourne le rotor RO de celle-ci.

Dans l'exemple représenté, l'axe de rotation Z–Z du rotor RO est vertical. Lesdits rotor et stator sont enfermés dans une enveloppe étanche 2 dans laquelle on peut réaliser un vide suffisant au bon fonctionnement de la roue cinétique, l'enveloppe 2 étant supportée par la plaque de base 1.

Par ailleurs, on prévoit, à l'extérieur de l'enveloppe 2, un écran cylindrique 3 enveloppant latéralement l'enveloppe 2 et destiné à protéger l'environnement contre l'éventualité d'une explosion du rotor.

La structure de la roue cinétique de la figure 1, qui est en grande partie connue, ne sera pas décrite en détail, mais seulement dans la mesure où cette structure est nécessaire à la compréhension de la présente invention.

Le rotor RO de la roue cinétique comporte un volant d'inertie 4, en forme au moins approximative de disque, solidaire d'un arbre inférieur 5 et d'un arbre supérieur 6, coaxiaux (axe z–z) et orthogonaux au plan dudit volant. Aux extrémités libres des arbres 5 et 6 sont prévus des systèmes de butée 7 et 8 à roulements mécaniques, susceptibles de coopérer avec des parties correspondantes fixes 9 et 10 du stator, pour supporter le rotor à l'arrêt et pour servir de limiteur de déviation axial et radial.

Les arbres 5 et 6 sont chacun solidaires d'une couronne 11 ou 12 de palier magnétique, ces couronnes 11 et 12 coopérant respectivement avec des couronnes 13 et 14 du stator, pour former des paliers magnétiques 11–13 et 12–14.

La roue cinétique comporte de plus un actuateur pour l'ajustement de la position axiale du rotor par rapport au stator. Cet actuateur comporte une partie annulaire 15 solidaire en rotation de l'arbre 5 (ou 6) et deux parties annulaires fixes 16 et 17, disposées de part et d'autre de la partie annulaire 15.

En outre, la roue cinétique de la figure 1 comporte un ensemble moteur 18, pour entraîner le rotor en rotation, et un ensemble générateur 19, pour restituer sous forme électrique l'énergie de rotation emmagasinée par ledit rotor. Bien entendu, éventuellement, l'ensemble moteur 18 et l'ensemble générateur 19 peuvent être constitués par une machine électrique unique réversible.

L'expérience montre que, pour des rotors relativement légers, par exemple dont la masse du volant 4 est inférieure à quelques kilogrammes, il n'apparaît pas de phénomène d'instabilité susceptible d'influencer l'axe dudit rotor, et ceci pratiquement quelle que soit la vitesse du rotor à l'intérieur de sa plage de vitesse (par exemple de 0 à 15 000 t/mn). Dans ce cas, pendant la rotation du rotor, l'axe z–z de celui-ci est constamment confondu avec l'axe Z–Z de rotation défini par les paliers du stator.

En revanche, lorsque la vitesse de rotation du rotor RO devient importante (par exemple ≥ 20 000 tr/mn) et/ou que la masse du volant 4 devient égale à quelques dizaines ou centaines de kilogrammes, notamment en vue d'utiliser la roue cinétique comme accumulateur cinétique d'énergie, on constate l'apparition d'un tel phénomène d'instabilité affectant l'axe dudit rotor RO.

Ce comportement instable n'apparaît qu'au-delà d'une vitesse limite de rotation, qui, cependant, est généralement très inférieure à la vitesse maximale prévue pour le rotor.

Par exemple, l'instabilité apparaît à 1500 t/mn pour un rotor dont la vitesse maximale est de 12 000 t/mn et dont la masse du volant 4 est de 200 kg.

Le phénomène d'instabilité se caractérise par le fait que l'axe de rotation z–z du rotor, tout en restant parallèle à l'axe magnétique Z–Z défini par les paliers du stator, s'éloigne de cet axe Z–Z en décrivant une spirale divergente, jusqu'au contact des systèmes de butée 7 et 8 du rotor avec les parties correspondantes fixes 9 et 10 du stator.

On a pu constater que:
– la fréquence à laquelle l'axe z–z décrit la spirale est proche ou égale à la fréquence à laquelle oscille le rotor lorsqu'on l'écarte radialement de sa position d'équilibre;
– la divergence radiale du rotor est d'autant plus rapide que la vitesse de rotation de celui-ci est plus grande;
– le mouvement en spirale divergente de l'axe z–z du rotor s'établit dans le même sens que la rotation dudit rotor.

La Demanderesse pense que l'explication de ce phénomène d'instabilité peut être trouvée, sans que cela puisse être limitatif de l'invention, dans l'action de pertes magnétiques (ou même aérodynamiques si le vide à l'intérieur de l'enveloppe 2 n'est pas suffisamment bon) engendrées par le mouvement relatif de pièces aimantées et de pièces conductrices de l'électricité. Notamment, quel que soit le soin apporté à la fabrication et au positionnement relatif des couronnes magnétiques 11–13, 12–14 et 15–16–17, on ne peut empêcher certains défauts d'homogénéité magnétique radiale, entraînant des pertes électromagnétiques, donnant elles-mêmes naissance à des forces perturbatrices, qui provoquent la divergence spiralée du rotor. Ainsi, selon cette hypothèse, le rotor divergerait sous l'action d'une force d'origine électromagnétique se développant notamment dans les paliers magnétiques 11–13 et 12–14 et dans l'actuateur 15–16–17.

Pour autant qu'on puisse le supposer et l'observer, les caractéristiques de cette force pertubatrice seraient:
– son amplitude $F_p$ est proportionnelle à la vitesse de rotation $\Omega$ du rotor et à l'excentrement e du rotor, c'est-à-dire à la distance séparant l'axe z–z de l'axe Z–Z de sorte que l'on peut écrire $F_p = \lambda \Omega e$.

Le facteur de proportionnalité $\lambda$ est variable d'un modèle à l'autre de roue cinétique et dépend des jeux mécaniques, de la verticalité de l'axe Z–Z, mais est une caractéristique de la roue cinétique correspondante.
– sa direction est orthogonale à celle de l'excentrement du rotor par rapport au stator;
– son sens est déterminé par le sens de rotation du rotor.

Sur la figure 2, on a représenté un système d'axes rectangulaires ox, oy, dont l'origine 0 se trouve sur l'axe Z–Z, le plan xoy étant orthogonal audit axe Z–Z. A un instant donné, l'axe z–z du rotor est excentré de l'axe Z–Z de la quantité e et se trouve en R sur la portion de spirale S, qu'il parcourt à la vitesse v. Cet axe z–z est soumis à l'action de la force perturbatrice $\vec{F_p}$ à laquelle s'oppose la force d'amortissement $\vec{F_a}$ de la rotation du rotor. La force $\vec{F_p}$ est, comme mentionnée ci-dessus, orthogonale à OR et de même sens que $\Omega$. La force $\vec{F_a}$ est colinéaire au vecteur vitesse $\vec{v}$, mais de sens opposé. De plus, l'axe x–x subit l'action de la force de rappel $\vec{F_r}$ exercée par les paliers magnétiques 11–13 et 12–14 et dont l'amplitude est proportionnelle à l'excentrement e.

En appelant l'angle entre les vecteurs $\vec{Ox}$ et $\vec{OR}$, $\vec{i}$, le vecteur directeur de $\vec{OR}$ et $\vec{j}$, le vecteur directeur de $\vec{F_p}$, on peut écrire:

$$\vec{F_p} = \lambda \, \Omega \, et \, \vec{j}$$

$\vec{F_a} = -f \, \vec{v}$, f étant constant et correspondant au coefficient de frottement appliqué au rotor,

$\vec{F_r} = -k \, e \, \vec{i}$, k étant constant et représentatif de la raideur radiale des paliers magnétiques.

A partir de ce système de forces, on peut écrire, en faisant intervenir la masse m du rotor, les équations du mouvement du rotor, qui sont:

$$x \, m \, \ddot{x} = k \, e \cos (\theta + \pi) + \lambda \, \Omega \, e \cos \left(\theta + \frac{\pi}{2}\right) - f \dot{x}$$

$$m \, \ddot{y} = k \, e \sin (\theta + \pi) + \lambda \, \Omega \, e \sin \left(\theta + \frac{\pi}{2}\right) - f \dot{y}$$

c'est-à-dire

$$m \, \ddot{x} = -k \, e \cos \theta - \lambda \, \Omega \, e \sin \theta - f \dot{x}$$
$$m \, \ddot{y} = -k \, e \sin \theta + \lambda \, \Omega \, e \cos \theta - f \dot{y}$$

En tenant compte du fait que $x = e \cos^{\theta}$ et $y = e \sin^{\theta}$

On obtient le système:

$$m \, \ddot{x} + f \dot{x} + k \, x = -\lambda \, \Omega \, y$$
$$m \, \ddot{y} + f \dot{y} + k \, y = \lambda \, \Omega \, x$$

La résolution de ce système d'équations différentielles, avec application du critère de ROUTH, montre que la rotation du rotor est stable si:

$$(1) \, \underline{f} > \frac{\lambda \, \Omega}{\omega_T} \, avec \, \omega_{\underline{T}} = \sqrt{\frac{k}{m}}.$$

L'inégalité (1) montre que, pour une roue cinétique donnée (c'est-à-dire pour une valeur de $\lambda$ déterminée), on ne peut assurer la stabilité de la rotation du rotor à une vitesse $\Omega$ donnée, qu'en agissant dans le sens de l'augmentation, sur le paramètre f et/ou sur le paramètre $\omega_T$.

Augmenter le paramètre f consiste à équiper la roue cinétique d'un amortisseur radial, actif ou passif. Un tel amortisseur doit généralement multiplier l'amortissement naturel au moins par 10 pour obtenir la stabilité. Il en résulte que, sous sa forme passive, c'est-à-dire constituée d'aimants permanents, un tel amortisseur nécessite beaucoup d'aimants et est donc volumineux. Des essais expérimentaux ont montré une amélioration consécutive à l'implantation d'un tel amortisseur passif; cependant, cette amélioration se fait au détriment de la masse de l'ensemble et, de plus, à cause des dispersions de fabrication, l'amortisseur passif doit être ajusté pour chacune des roues cinétiques.

Dans le cas d'un amortisseur actif, on prévoit au moins un actuateur radial 20 (voir la figure 1), associé à un capteur 21 et engendrant une force d'amortissement en fonction de la mesure de la vitesse radiale du rotor donnée par le capteur 21. Un tel amortisseur actif, décrit dans le brevet français FR-A-2 511 558 mentionné ci-dessus, donne toute satisfaction. Cependant, il présente l'inconvénient de nécessiter au moins une chaîne d'asservissement augmentant le coût de la roue cinétique. De plus, en cas de panne de ladite chaîne d'asservissement, la divergence spiralée du rotor n'est plus contrôlée.

On remarquera que le critère $\omega_T$ correspond à la pulsation de translation radiale. Si l'on envisage (comme indiqué ci-dessus) d'augmenter cette pulsation d'un facteur de 10, il faut multiplier le rapport $\frac{k}{m}$ c'est-à-dire, la raideur radiale k, par 100, ce qui est rédhibitoire. Par ailleurs, l'augmentation de la raideur des paliers, c'est-à-dire de leur efficacité, se traduirait en retour par une augmentation de la tendance à la divergence du rotor en rotation, puisque les pertes par courants de Foucault augmenteraient dans les paliers magnétiques.

Aussi, la présente invention a pour objet de résoudre le problème de la divergence spiralée du rotor par une autre voie que les deux possibles décrites ci-dessus.

Pour cela, selon l'invention, on prévoit un système de suspension élastique, à caractéristique anisotrope et à fréquence propre appropriée, entre le stator (ou une partie du stator) de la roue cinétique et un support fixe de grande inertie.

Autrement dit, le stator n'est plus directement relié à un point fixe, par exemple le sol.

Dans le mode de réalisation de l'invention, montré par la figure 1, ce système élastique porte la référence 22 et est constitué de lames élastiques 23 supportant la roue cinétique et solidaire par une de leurs extrémités de la plaque 1 et par leur autre extrémité d'une base 24, solidaire au sol 25.

Comme le montre la figure 3, le système 22 comporte quatre lames élastiques 23 parallèles entre elles et à l'axe Z–Z, de façon que les petits côtés desdites lames soient tous parallèles à une direction U–U et que les grands côtés de celles-ci soient tous parallèles à une direction orthogonale V–V.

Ainsi, dans la direction U–U, le système élastique 22 est beaucoup moins raide que dans les directions V–V et Z–Z. Le système 22 présente donc une anisotropie de raideur radiale autour de l'axe Z–Z.

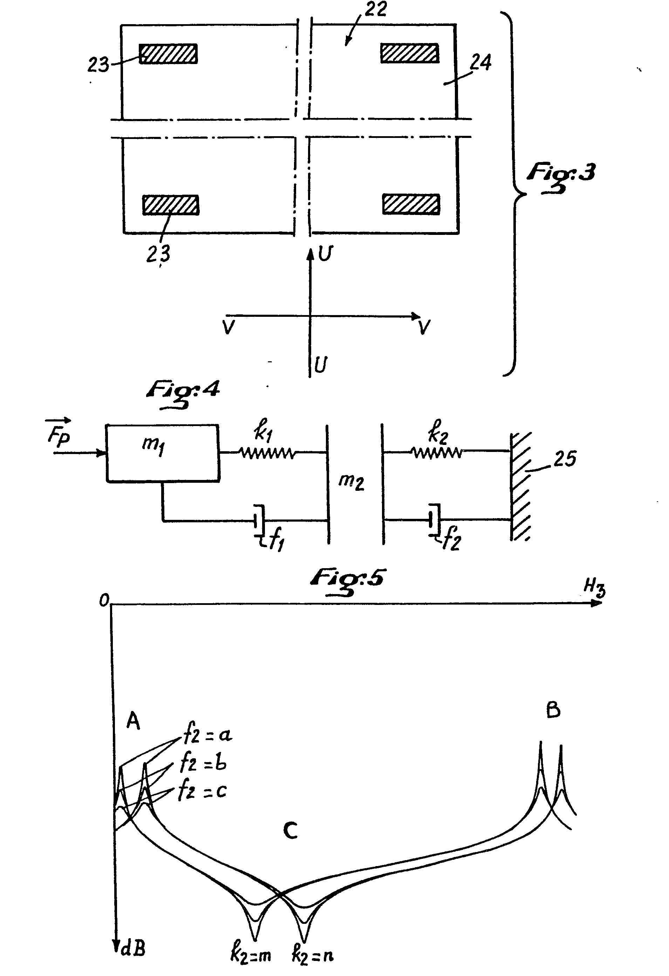

La figure 4 montre le schéma physique équivalent de l'agencement de roue cinétique de la figure 1. Le rotor RO de masse $m_1$, subissant la force perturbatrice $\vec{F_p}$, est reliée au stator de masse

$m_2$ par un système de raideur $k_1$ et de coefficient d'amortissement $f_1$ ($k_1$ et $f_1$ étant dus aux paliers magnétiques 11–13 et 12–14), tandis que le stator est relié au sol 25 par le système élastique 22, de raideur $k_2$ et de coefficient d'amortissement $f_2$.

L'idée de base de la présente invention consiste à ne plus considérer les supports des paliers du stator comme étant fixes par rapport au sol. Au contraire, ces supports de palier possèdent une certaine raideur et un amortissement par rapport à un ensemble rigide (le sol).

Le modèle selon la figure 4 se laisse facilement mettre en équation et on peut en déterminer sans difficulté la fonction de transfert. On remarquera que pour un agencement de roue cinétique particulier les paramètres $m_1$, $m_2$, $f_1$ et $k_1$ sont déterminés, alors que les paramètres $f_2$ et $k_2$ doivent être optimisés pour obtenir la meilleure action possible du système de suspension élastique 22.

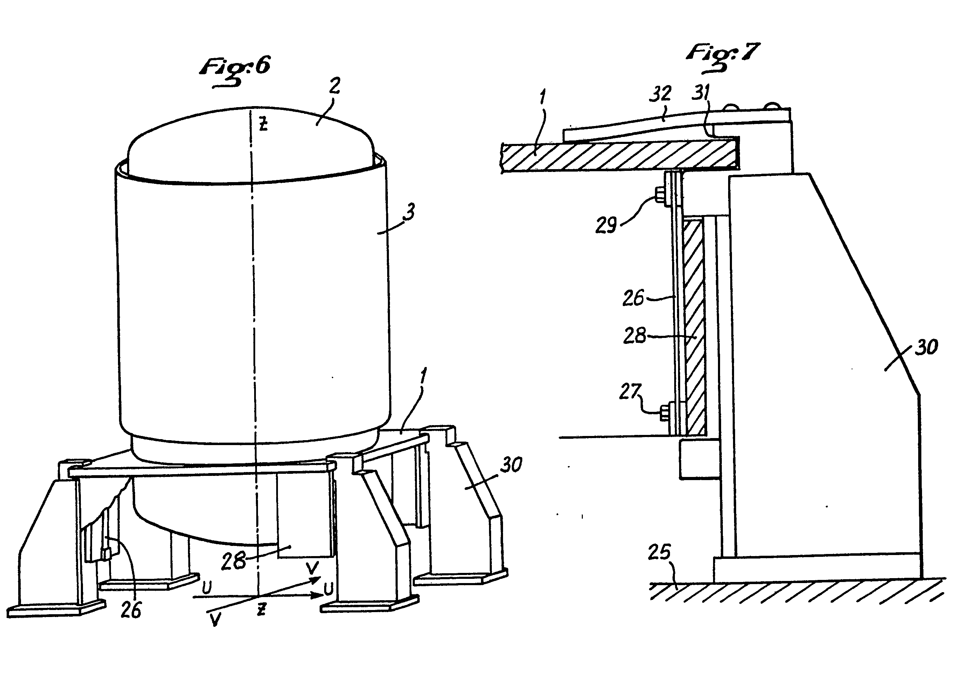

Sur la figure 5, on a représenté, dans un diagramme fréquence (en Hz)-amplitude (en dB), la fonction de transfert d'un agencement de roue cinétique selon l'invention pour lequel on avait:

$m_1 = 215\ kg$      $m_2 = 218\ kg$
$k_1 = 255 \cdot 10^{-3}\ N/m$      $f_1 = 50\ N/m/s$.

Cette fonction de transfert a été tracée pour deux valeurs de $k_2$ ($m = 200 \cdot 10^{-3}\ N/m$ et $n = 258 \cdot 10^{-3}\ N/m$) et pour trois valeurs de $f_2$ ($a = 50\ N/m/s$, $b = 200\ N/m/s$ et $c = 500\ N/m/s$). Le paramètre $k_2$ a été choisi de façon que le mode vibratoire propre du stator soit voisin du mode vibratoire de translation du rotor.

La figure 5 montre que, pour toutes ces valeurs, la fonction de transfert présente deux pulsations de résonance A et B découplées de la pulsation propre du rotor C, à laquelle on obtient une anti-résonance.

Dans la variante de réalisation montrée par les figures 6 et 7, on prévoit un système 22 à lames élastiques 26 qui, au lieu de travailler en compression comme les lames 23 de la figure 1, travaillent en traction.

Pour ce faire, la roue cinétique est solidaire par sa partie inférieure d'une pluralité de lames 26, toutes parallèles les unes aux autres comme les lames 22. A cette fin, à leur partie inférieure, les lames 26 sont solidaires en 27, d'équerres 28 solidaires de la plaque 1 et prolongeant celle-ci vers le bas. A leur partie supérieure, les lames 26 sont solidaires en 29 de socles 30, ancrés rigidement au sol 25 et répartis à la périphérie de la plaque 1.

Les bords de la plaque 1 sont engagés dans des encoches 31 prévues dans les socles 30, guidant lesdits bords tout en permettant à la plaque 1 un certain jeu dans la direction U–U.

Eventuellement, pour communiquer un certain amortissement au mouvement de la plaque 1, c'est-à-dire de l'ensemble du stator par rapport aux socles 30, on peut prévoir un dispositif de friction 32. Celui-ci peut prendre la forme d'une lame élastique précontrainte (ou à pression réglable) prenant appui sur les socles 30 et en appui contre la plaque 1.

Quoique les figures 1 et 6 illustrent respectivement des modes de réalisation de l'invention dans lesquels les lames élastiques travaillent en compression et en traction, il va de soi qu'un agencement selon l'invention pourrait comprendre des lames élastiques travaillant en compression et des lames élastiques travaillant en traction.

## Revendications

1. Agencement de roue cinétique comprenant un stator (ST) et un rotor (RO), des paliers magnétiques (11–13, 12–14) formés de parties coopérantes (13, 14 et 11, 12) respectivement liées au stator et au rotor pour suspendre magnétiquement le rotor par rapport au stator, des paliers mécaniques (7, 8) pour permettre au stator de supporter le rotor lorsque celui-ci n'est pas suspendu magnétiquement, un volant d'inertie (4) constituant une partie du rotor, et des moyens (15, 16, 17) permettant de contrôler le long de l'axe de rotation Z–Z défini par le stator la position axiale du rotor par rapport au stator, ledit stator étant relié à un support (25) de grande inertie, caractérisé en ce qu'il comporte, pour les parties (13, 14) de palier magnétique liées au stator, un système de suspension élastique (22), qui est raide dans une première direction parallèle à l'axe de rotation Z–Z du rotor, raide dans une seconde direction V–V orthogonale à l'axe de rotation du rotor et souple dans une troisième direction U–U orthogonale aux deux directions Z–Z et V–V, précédentes.

2. Agencement de roue cinétique selon la revendication 1, caractérisé en ce que les parties (13, 14) de palier magnétique liées au stator sont solidaires de celui-ci et en ce que le système de suspension élastique (22) est disposé entre le support de grande inertie (25) et le stator.

3. Agencement de roue cinétique selon l'une quelconque des revendications 1 ou 2, comportant une enveloppe (2) qui enferme le stator et le rotor et dans laquelle il est possible de faire le vide, caractérisé en ce qu'il comporte une plaque de base (1) portant le stator et le rotor et faisant saillie à l'extérieur de ladite enveloppe (2) et en ce que ledit système de suspension (22) est disposé entre la partie de la plaque (1) faisant saillie à l'extérieur de l'enveloppe (2) et ledit support de grande inertie (25).

4. Agencement de roue cinétique selon l'une quelconque des revendications 1 à 3, caractérisé en ce que le système de suspension (22) comporte une pluralité de lames élastiques (23, 26) disposées parallèlement les unes aux autres de façon que la longueur, la largeur et l'épaisseur desdites lames élastiques soient respectivement parallèles aux première (Z–Z), seconde (V–V) et troisième (U–U) directions.

5. Agencement de roue cinétique selon la revendication 4, caractérisé en ce que les lames élastiques (23, 26) travaillent à la compression et/ou à la traction.

6. Agencement de roue cinétique selon les revendications 3 et 5, caractérisé en ce que le système de suspension comporte une pluralité de socles (30) répartis à la périphérie de la partie de la plaque (1) faisant saillie à l'extérieur de l'enveloppe (2) et pourvus à leur partie supérieure de moyens de guidage (31) du bord de ladite plaque, la liaison entre la plaque (1) et chaque socle (30) étant réalisée par une lame élastique (26) solidaire à sa partie supérieure dudit socle et à sa partie inférieure d'un prolongement (28) solidaire de ladite plaque (1).

7. Agencement de roue cinétique selon l'une quelconque des revendications 1 à 6, caractérisé en ce qu'il comporte des moyens (32) amortissant le mouvement des parties de palier (13, 14) liées au stator, dû à la souplesse du système de suspension dans ladite troisième direction (U–U).

8. Agencement de roue cinétique selon les revendications 3 à 7, caractérisé en ce que lesdits moyens amortisseurs sont des lames élastiques (32) frottant sur ladite plaque (1).

9. Agencement de roue cinétique selon les revendications 6 et 8, caractérisé en ce que lesdites lames élastiques (32) sont solidaires d'au moins certains desdits socles (30).

10. Agencement de roue cinétique selon l'une quelconque des revendications 1 à 9, pour l'accumulation et la restitution d'énergie cinétique et comportant à cet effet au moins une machine électrique (18, 19) incorporée pour partie audit stator et pour partie audit rotor, caractérisé en ce que le support de grande inertie est le sol, en ce que la première direction Z–Z est verticale et en ce que les seconde et troisième directions forment un plan horizontal.

**Patentansprüche**

1. Anordnung eines Schwungrades bestehend aus einem Stator (ST) und einem Rotor (RO), Magnetlager (11–13, 12–14), die aus zusammenarbeitenden Teilen (13, 14 bzw. 11, 12) gebildet sind und zur magnetischen Aufhängung des Rotors gegenüber dem Stator am Stator bzw. Rotor liegen, Mechaniklager (7, 8), durch die der Rotor vom Stator gehalten wird, wenn jener nicht magnetisch aufgehängt ist, ein Trägheitsrad (4), das einen Teil des Rotors bildet, und aus einer Einrichtung (15, 16, 17), durch die längs der vom Stator bestimmten Drehachse Z–Z die Axialstellung des Rotors gegenüber dem Stator, der an einer Halterung (25) grosser Trägheit befestigt ist, kontrolliert werden kann, dadurch gekennzeichnet, dass sie für die Teile (13, 14) des mit dem Stator verbundenen Magnetlagers ein elastisches Aufhängesystem (22) aufweist, das in einer ersten zur Drehachse Z–Z des Rotors parallel verlaufenden Richtung und in einer zweiten zur Drehachse des Rotors orthogonal verlaufenden Richtung V–V starr und in einer dritten zu den beiden vorgenannten Richtungen Z–Z und V–V orthogonal verlaufenden Richtung U–U nachgiebig ist.

2. Anordnung nach Anspruch 1, dadurch gekennzeichnet, dass die am Stator liegenden Magnetlagerteile (13, 14) mit dem Stator verbunden sind und dass das elastische Aufhängesystem (22) zwischen der Halterung (25) grosser Trägheit und dem Stator angeordnet ist.

3. Anordnung nach einem der Ansprüche 1 oder 2 bestehend aus einer Umhüllung (2), die den Stator und den Rotor einschliesst und in die ein Vakuum eingefüllt werden kann, dadurch gekennzeichnet, dass sie eine Grundplatte (1) aufweist, die den Stator und den Rotor trägt und über die Umhüllung (2) nach aussen heraustritt, und dass das Aufhängesystem zwischen dem aus der Umhüllung (2) heraustretenden Teil der Platte (1) und der Halterung grosser Trägheit angeordnet ist.

4. Anordnung nach einem der Ansprüche 1 bis 3, dadurch gekennzeichnet, dass das Aufhängesystem (22) mehrere federnde Blätter oder Stäbe (23, 26) aufweist, die zueinander parallel verlaufend derart angeordnet sind, dass die Länge, Breite und Dicke der federnden Bänder oder Stäbe jeweils parallel zur ersten (Z–Z), zweiten (V–V) bzw. dritten (U–U) Richtung liegen.

5. Anordnung nach Anspruch 4, dadurch gekennzeichnet, dass die federnden Bänder oder Stäbe (23, 26) auf Druck und/oder Zug reagieren.

6. Anordnung nach den Ansprüchen 3 und 5, dadurch gekennzeichnet, dass das Aufhängesystem mehrere Sockel (30) aufweist, die am Umfang des aus der Umhüllung (2) nach aussen heraustretenden Teils der Platte (1) voneinander getrennt angeordnet und die an ihrem oberen Teil mit einer am Rand der Platte liegenden Führungseinrichtung (31) versehen sind, wobei die Verbindung zwischen der Platte (1) und jedem Sockel (30) durch einen federnden Stab (26) hergestellt ist, der mit seinem oberen Teil am Sockel und mit seinem unteren Teil an einer mit der Platte (1) verbundenen Verlängerung (28) befestigt ist.

7. Anordnung nach einem der Ansprüche 1 bis 6, dadurch gekennzeichnet, dass eine Einrichtung (32) zum Dämpfen der Bewegung der am Stator liegenden Lagerteile (13, 14) vorgesehen ist, wobei die Bewegung aufgrund der in der dritten Richtung bestehenden Nachgiebigkeit (U–U) des Aufhängesystems gedämpft wird.

8. Anordnung nach einem der Ansprüche 3 bis 7, dadurch gekennzeichnet, dass als Dämpfungsmittel federnde Blätter (32) verwendet werden, die an der Platte (1) reiben.

9. Anordnung nach einem der Ansprüche 6 und 8, dadurch gekennzeichnet, dass die federnden Blätter (32) mit zumindest bestimmten Sockeln (30) fest verbunden sind.

10. Anordnung nach einem der Ansprüche 1 bis 9 zum Sammeln und Rückgeben von Bewegungsenergie und dazu bestehend aus zumindest einer zum Teil im Stator und zum Teil im Rotor eingebauten Elektromaschine (18, 19), dadurch gekennzeichnet, dass als Halterung grosser Trägheit der Erdboden genutzt wird, dass die erste Richtung Z–Z vertikal verläuft und dass die zweite und dritte Richtung eine horizontale Ebene bilden.

**Claims**

1. Kinetic wheel arrangement comprising a stator (ST) and a rotor (RO), magnetic bearings (11–13, 12–14) formed by cooperating parts (13, 14 and 11, 12) respectively connected to the stator and to the rotor in order magnetically to suspend the rotor with respect to the stator, mechanical bearings (7, 8) to allow the stator to support the rotor when the latter is not suspended magnetically, an inertia flywheel (4) constituting a part of the rotor, and means (15, 16, 17) for monitoring along the axis of rotation (Z–Z) defined by the stator, the axial position of the rotor with respect to the stator, said rotor being connected to a high-inertia support (25), characterized in that said kinetic wheel arrangement comprises, for the magnetic bearing parts (13, 14) connected to the stator, an elastic suspension system (22) which is rigid in a first direction parallel to the axis of rotation (Z–Z) of the rotor, rigid in a second direction (V–V) at right angles to the axis of rotation of the rotor and flexible in a third direction (U–U) at right angles to the two preceding directions (Z–Z) and (V–V).

2. The kinetic wheel arrangement of Claim 1, characterized in that the magnetic bearing parts (13, 14) connected to the stator are fast therewith and in that the elastic suspension system (22) is disposed between the high-inertia support (25) and the stator.

3. The kinetic wheel arrangement of one of Claims 1 or 2, comprising an envelope (2) which encloses the stator and the rotor and in which it is possible to create a vacuum, characterized in that said kinetic wheel arrangement comprises a base plate (1) bearing the stator and the rotor and projecting outside said envelope (2) and in that said suspension system (22) is disposed between the part of the plate (1) projecting outside the envelope (2) and said high-inertia support (25).

4. The kinetic wheel arrangement of one of Claims 1 to 3, characterized in that the suspension system (22) comprises a plurality of elastic blades (23, 26) disposed parallel to one another so that the length, width and thickness of said elastic blades are respectively parallel to the first (Z–Z), second (V–V) and third (U–U) directions.

5. The kinetic wheel arrangement of Claim 4, characterized in that the elastic blades (23, 26) are in compression and/or in traction.

6. The kinetic wheel arrangement of Claims 3 and 5, characterized in that the suspension system comprises a plurality of bases (30) distributed on the periphery of the part of the plate (1) projecting outside the envelope (2) and provided in their upper part with means (31) for guiding the edge of said plate, the connection between the plate (1) and each base (30) being effected by an elastic blade (26) fast in its upper part with said base and in its lower part with an extension (28) fast with said plate (1).

7. The kinetic wheel arrangement of one of Claims 1 to 6, characterized in that it comprises means (32) damping the movement of the bearing parts (13, 14) connected to the stator, due to the flexibility of the suspension system in said third direction (U–U).

8. The kinetic wheel arrangement of Claims 3 to 7, characterized in that said damping means are elastic blades (32) rubbing on said plate (1).

9. The kinetic wheel arrangement of Claims 6 and 8, characterized in that said elastic blades (32) are fast with at least certain of said bases (30).

10. The kinetic wheel arrangement of one of Claims 1 to 9, for the accumulation and restoring of kinetic energy and comprising to this end at least one electric machine (18, 19) incorporated partly in said stator and partly in said rotor, characterized in that the high-inertia support is the ground, in that the first direction (Z–Z) is vertical and in that the second and third directions form a horizontal plane.

*Fig.1*

*Fig.2*

**_Fig. 3_**

**_Fig. 4_**

**_Fig. 5_**

Fig:6

Fig:7

13